# FASCICULE DE BREVET EUROPEEN

(11) **EP 3 996 903 B1**
(45) Date de publication et mention de la délivrance du brevet: **30.08.2023**
(21) Numéro de dépôt: 20750334.3
(22) Date de dépôt: 08.07.2020
(51) Int. Cl.: B29D 30/04, B29D 30/06, B29C 70/22, B60C 9/02

(54) **ASSEMBLAGE COMPRENANT UN TISSU DÉFORMABLE PLASTIQUEMENT ET UNE STRUCTURE PORTEUSE**
ANORDNUNG AUS EINEM PLASTISCH VERFORMBAREN GEWEBE UND EINER TRAGSTRUKTUR
ASSEMBLY COMPRISING A PLASTICALLY DEFORMABLE FABRIC AND A SUPPORTING STRUCTURE

(30) Priorité: 11.07.2019 FR 1907820
(43) Date de publication de la demande: 18.05.2022
(73) Titulaire: Compagnie Générale des Etablissements Michelin, 63000 Clermont-Ferrand (FR)
(72) Inventeur: BROUSSEAU, Magaly, 63040 Clermont-Ferrand Cedex 9 (FR); GUILLAUMAIN, Jérémy, 63040 Clermont-Ferrand Cedex 9 (FR); LIMOZIN, Bastien, 63040 Clermont-Ferrand Cedex 9 (FR); RIGO, Sébastien, 63040 Clermont-Ferrand Cedex 9 (FR)
(74) Mandataire: Louret, Sylvain
(86) Numéro de dépôt international: PCT/FR2020/051220
(87) Numéro de publication internationale: WO 2021/005305

(56) Documents cités:
- WO-A1-2018/130783
- WO-A1-2019/077282
- WO-A1-2019/092343

## Description

### Domaine technique de l'invention

L'invention a pour objet un assemblage, un assemblage imprégné, un article de caoutchouc comprenant cet assemblage et un pneumatique comprenant cet assemblage.

L'invention concerne en particulier le domaine des pneumatiques destinés à équiper des véhicules. Le pneumatique est conçu préférentiellement pour des véhicules de tourisme, mais peut être utilisé sur tout autre type de véhicule tels que des véhicules à deux roues, des véhicules poids lourds, agricoles, de génie civil ou des avions ou, plus généralement, sur tout dispositif roulant.

### Art antérieur

Dans ce qui suit, et par convention, les directions circonférentielle XX', axiale YY' et radiale ZZ' désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur », respectivement « radialement extérieur», on entend «plus proche de l'axe de rotation du pneumatique », respectivement « plus éloigné de l'axe de rotation du pneumatique». Par «axialement intérieur », respectivement « axialement extérieur», on entend «plus proche du plan équatorial du pneumatique», respectivement « plus éloigné du plan équatorial du pneumatique», le plan équatorial XZ du pneumatique étant le plan passant par le milieu de la surface de roulement du pneumatique et perpendiculaire à l'axe de rotation du pneumatique.

De façon générale, un pneumatique comprend un sommet ayant deux extrémités axiales prolongées chacune, radialement vers l'intérieur, par un flanc puis par un bourrelet destiné à entrer en contact avec une jante, l'ensemble délimitant une cavité torique intérieure. Plus précisément le sommet comprend, radialement de l'extérieur vers l'intérieur, une bande de roulement, destinée à entrer en contact avec le sol par l'intermédiaire d'une surface de roulement, une armature de sommet et une portion d'armature de carcasse destinées à assurer le renforcement du pneumatique. L'armature de carcasse relie les deux flancs entre eux en s'étendant dans une portion radialement intérieure du sommet et est ancrée, dans chaque bourrelet, à un élément circonférentiel de renforcement, le plus souvent de type tringle.

Le pneumatique possède en tout point de sa surface de roulement, destinée à entrer en contact avec un sol, une double courbure : une courbure circonférentielle et une courbure méridienne. Par courbure circonférentielle, on entend une courbure dans un plan circonférentiel, défini par la direction circonférentielle et la direction radiale. Par courbure méridienne, on entend une courbure dans un plan méridien ou radial, défini par la direction axiale et la direction radiale.

Il est connu que la mise à plat du pneumatique sur un sol horizontal, dans un plan circonférentiel et dans un plan méridien, est conditionnée par les valeurs des rayons de courbure respectivement circonférentiel et méridien, au niveau des points de la surface de roulement positionnés aux limites de l'aire de contact du pneumatique avec le sol. Cette mise à plat est d'autant plus facilitée que ces rayons de courbure sont grands, c'est-à-dire que les courbures sont petites, la courbure en un point, au sens mathématique, étant l'inverse du rayon de courbure. Il est également connu que la mise à plat du pneumatique impacte les performances du pneumatique, en particulier la résistance au roulement, l'adhérence, l'usure et le bruit.

Par conséquent, l'homme du métier, spécialiste du pneumatique, cherchant à obtenir le bon compromis entre les performances attendues du pneumatique telles que, de façon non exhaustive, l'usure, l'adhérence, l'endurance, la résistance au roulement et le bruit, a développé des solutions alternatives au pneumatique classique pour optimiser sa mise à plat.

Un pneumatique classique de l'état de la technique a généralement une grande courbure méridienne, c'est-à-dire un petit rayon de courbure méridien, au niveau des extrémités axiales de la bande de roulement, appelées épaules, lorsque le pneumatique, monté sur sa jante de montage et gonflé à sa pression d'utilisation recommandée, est soumis à sa charge nominale. La jante de montage, la pression d'utilisation et la charge nominale sont définies par des normes, telles que, par exemple, les normes de la European Tyre and Rim Technical Organisation (ETRTO).

Un pneumatique classique porte la charge appliquée, essentiellement par les extrémités axiales de la bande de roulement, ou épaules, et par les flancs reliant la bande de roulement à des bourrelets assurant la liaison mécanique du pneumatique avec sa jante de montage. Il est connu qu'une mise à plat méridienne d'un pneumatique classique, avec une petite courbure méridienne au niveau des épaules, est généralement difficile à obtenir.

Le document WO2018/130782 décrit un pneumatique dont la mise à plat est facilitée comprenant un assemblage comprenant une première et une deuxième structure s'étendant selon une première direction générale, reliées par une structure porteuse, la première structure étant agencée de telle sorte que, pour une longueur au repos L de la première structure selon la première direction générale, l'allongement à force maximale Art de la première structure est supérieure à 2×π×H/L, avec H≥H0×K, H0 représentant la distance droite moyenne entre une face interne de la première structure et une face interne de la deuxième structure lorsque la structure porteuse est au repos, et K=0,50. Une première structure en éléments filaires d'élasthanne est présentée. Ainsi, cet assemblage peut s'étendre sans se rompre lors de la conformation qui lui est imposée lors de la fabrication du pneumatique. Toutefois, il peut exister un retour élastique de la première structure à l'issue de la conformation qui nécessite d'être particulièrement vigilant entre la conformation et la cuisson du pneumatique afin de s'assurer de la parfaite uniformité de l'ébauche (ou pneumatique cru).

Le document WO2018/130783 décrit un pneumatique présentant une mise à plat améliorée de la bande de roulement comprenant un assemblage comprenant une première et une deuxième structure s'étendant selon une première direction générale, reliées par une structure porteuse. La première structure comprend des premier et deuxième organes filaires tels que, pour tout allongement de la première structure selon la première direction générale inférieur ou égal à 2×π×H/L, le premier organe filaire présente un allongement non nul et est non rompu, et il existe un allongement de la première structure selon la première direction générale inférieur ou égal à 2×π×H/L à partir duquel le deuxième organe filaire est rompu, L représentant la longueur au repos de la première structure selon la première direction générale, et H≥H0×K, H0 représentant la distance droite moyenne entre une face interne de la première structure et une face interne de la deuxième structure lorsque la structure porteuse est au repos, et K=0,50. Ainsi, lors de la conformation, les deuxièmes organes filaires rompent, permettant à la première structure de s'étendre. Toutefois, il convient d'être attentif lors de l'opération de conformation afin que les ruptures, qui peuvent avoir lieu par à-coup, n'engendrent pas d'hétérogénéités dans l'allongement de la première structure, qui pourraient nuire à la parfaite uniformité de l'ébauche.

La présente invention a en particulier pour objectif de proposer un assemblage résolvant les problèmes soulevés par l'art antérieur, qui soit en particulier capable de se déformer continûment et sans retour élastique, ainsi qu'un pneumatique comprenant cet assemblage permettant une mise à plat améliorée de la bande de roulement lorsque le pneumatique est soumis à une charge.

### Description détaillée de l'invention

### Définitions

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Par « sensiblement parallèle » ou « s'étendant sensiblement selon », on entend que l'angle formé par les deux directions en question est inférieur à 10°, de préférence inférieur à 5°, de manière préférée inférieur à 2° et de manière très préférée inférieur ou égal à l'erreur de mesure de l'angle par une méthode adaptée.

Par déformation plastique d'un élément filaire, on entend, comme connu de l'Homme du métier, que lorsque cet élément est étiré selon sa direction générale, sa déformation est irréversible. En d'autres termes, il ne reprend pas sa forme initiale lorsque la sollicitation est arrêtée.

Par « direction générale » d'un objet, on entend la direction générale selon laquelle s'étend l'objet selon sa plus grande longueur. Pour un tissu, la direction générale du tissu est parallèle aux bords longitudinaux du tissu. Ainsi, par exemple, un tissu enroulé sur une bobine de révolution autour d'un axe présente une direction générale sensiblement parallèle à la direction de déroulage du tissu (c'est à dire la direction circonférentielle) qui est perpendiculaire aux directions axiale et radiale de la bobine.

### Assemblage

Le principe de l'assemblage selon l'invention est d'avoir une structure porteuse comprenant des éléments porteurs reliant le premier tissu et le deuxième tissu, et capable, une fois l'assemblage agencé dans le pneumatique, de porter la charge appliquée au pneumatique par la mise en tension d'une partie des éléments porteurs positionnés en dehors de l'aire de contact, les éléments porteurs positionnés dans l'aire de contact étant soumis à un flambage car soumis à un effort de compression et ne participant donc pas au port de la charge appliquée.

La première direction de chaine étant sensiblement parallèle à la première direction générale et le premier tissu étant suffisamment déformable, le procédé de fabrication du pneumatique est largement facilité. En effet, le premier tissu peut être déformé grâce à l'allongement plastique du deuxième organe filaire de façon à suivre la conformation qui lui est imposée lors de la fabrication du pneumatique. L'utilisation de tels premiers éléments filaires de chaine permet d'obtenir des allongements relativement importants. Grâce à l'allongement plastique du deuxième organe filaire et la présence du premier organe filaire, la structure tissée du premier tissu est conservée avec le maintien d'une structure de chaine continue dans le premier tissu. Enfin, la mise en oeuvre d'un deuxième organe filaire se déformant plastiquement sous faible contrainte permet de réduire de façon importante les contraintes à imposer lors de la conformation du pneumatique avec une répartition de l'allongement très homogène dans l'ensemble du premier tissu, conduisant à une conformation facilitée et plus régulière.

### Premier tissu de l'assemblage selon l'invention

Le premier tissu de l'assemblage selon l'invention présente un bord longitudinal s'étendant suivant une première direction générale (G1), et comprend des premiers éléments filaires, dits de chaîne, sensiblement parallèles entre eux et s'étendant selon une première direction (C1) dite de chaine, sensiblement parallèle à la première direction générale (G1), chaque premier élément filaire de chaîne comprenant des premier et deuxième organes filaires.

Dans un mode de réalisation préféré, le premier tissu est agencé de sorte que, pour toute contrainte non nulle, exprimée en N, inférieure ou égale à (P0 × (L/2π + H) × 1) / 2 exercée sur le premier tissu selon la première direction générale, le premier tissu présente un allongement non nul selon la première direction générale.

Dans cette expression ainsi que dans la suite de l'exposé, 1 est la largeur du premier tissu exprimée en m et P0=100000.

Dans un mode de réalisation préféré, le premier tissu est agencé de sorte que, pour tout allongement du premier tissu selon la première direction générale inférieur ou égal à (2π × H) / L, le premier tissu développe une force, exprimée en N, selon la première direction générale inférieure ou égale à (P0 × (L/2π + H) × 1) / 2. La force développée est mesurée en appliquant la norme NF EN ISO 13934-1 de juillet 2013.

Ainsi, le premier tissu est déformable sous une contrainte relativement faible ce qui permet, lors du procédé de fabrication du pneumatique, d'utiliser une contrainte de conformation adaptée ne risquant pas de détériorer l'ébauche.

Dans un mode de réalisation, la force maximale du le premier tissu selon la première direction générale, est supérieure à (P0 × (L/2π + H) × 1) / 2. La force maximale est la force nécessaire pour obtenir l'allongement à la force maximale tel que défini dans la norme NF EN ISO 13934-1 de juillet 2013. Ainsi, à contrainte imposée, on évite de rompre le premier tissu lors de la conformation.

Avantageusement, P0=80000, de préférence P0=60000, plus préférentiellement P0=40000. Plus P0 est petit, plus il est possible d'utiliser des contraintes petites lors du procédé de fabrication du pneumatique et moins on risque de détériorer l'ébauche lors de ce procédé.

De manière préférée, le premier tissu comprend des premiers éléments filaires, dits de trame, sensiblement parallèles entre eux et s'entrecroisant avec les premiers éléments filaires de chaine. Dans ce mode de réalisation préférentiel, le premier tissu comprend, de manière connue de l'homme du métier, une armure caractérisant l'entrecroisement des premiers éléments filaires de chaine et de trame. Selon les modes de réalisation, cette armure est de type toile, serge ou satin. De façon préférée, afin de conférer de bonnes propriétés mécaniques dans une utilisation en pneumatique, l'armure est de type toile.

De manière préférée, les premières directions de chaine et de trame forment l'une avec l'autre un angle allant de 70° à 90°, de préférence sensiblement égal à 90°.

Les caractéristiques mécaniques de tels tissus telles que leur rigidité en extension et leur force à force maximale en traction, selon le sens des éléments filaires de chaine ou de trame, dépendent des caractéristiques des éléments filaires, telles que, pour des éléments filaires textiles, le titre, exprimé en tex ou g/1000 m, la ténacité, exprimée en cN/tex, et la contraction standard, exprimée en %, ces éléments filaires étant répartis selon une densité donnée, exprimée en nombre de fils/dm. Toutes ces caractéristiques sont fonction du matériau constitutif des éléments filaires et de leur procédé de fabrication.

Très préférentiellement, les premiers éléments filaires de chaine s'étendent continûment sur toute la longueur du premier tissu.

### - Premier organe filaire

De manière préférée, le premier organe filaire comprend au moins un brin multifilamentaire comprenant plusieurs monofilaments chacun constitué d'un matériau choisi parmi un polyester, un polyamide, une polycétone, un polyuréthane, une fibre naturelle, de préférence choisi parmi un polyester, un polyamide, une polycétone, un polyuréthane et un assemblage de ces matériaux, plus préférentiellement choisi parmi les polyesters et les assemblages de polyesters. Les polyesters sont avantageux en raison de leur ténacité élevée, leur coût faible, leur tenue thermique compatible avec une utilisation en pneumatique et une contraction thermique standard pouvant être choisie.

De préférence, la longueur de chaque premier organe filaire au repos est comprise entre L et 1,30×L, préférentiellement comprise entre L et 1,25×L, très préférentiellement comprise entre L et 1,20×L. La longueur au repos du premier organe filaire est mesurée selon la direction principale du premier organe filaire. Cette longueur correspond à la longueur totale du premier organe filaire quand il n'est pas incorporé dans un premier élément filaire, et lorsqu'il est au repos, c'est-à-dire qu'il n'est ni en extension, ni en compression selon la direction générale du premier organe filaire, et présente donc un allongement nul.

### - Deuxième organe filaire

Le deuxième organe filaire de chaque premier élément filaire du premier tissu de l'assemblage selon l'invention est tel que, pour tout allongement du premier tissu selon la première direction générale (G1) inférieur ou égal à 2×π×H / L, le deuxième organe filaire se déforme plastiquement, avec 0 < H ≤ K.H0, H0 représentant en m la distance droite moyenne entre une face interne du premier tissu et une face interne du deuxième tissu lorsque chaque portion filaire porteuse est au repos, L représentant la longueur au repos du premier tissu selon la première direction générale (G1) et K=1,3. De manière préférée, K est égal à 1,2, préférentiellement égal à 1,1 et très préférentiellement égal à 1,05.

Par distance droite moyenne entre la face interne du premier tissu et la face interne du deuxième tissu, on entend la distance mesurée perpendiculairement à ces deux faces. En d'autres termes, il s'agit de la distance la plus courte entre ces deux faces. Cette distance droite est mesurée et moyennée en au moins 5 points différents équi-répartis sur l'assemblage au repos.

Par longueur au repos L du premier tissu, on entend une longueur du premier tissu qui n'est ni en extension ni en compression selon la première direction générale et présente donc un allongement nul selon cette première direction générale. Le premier tissu n'est alors soumis à aucune contrainte extérieure autre que son propre poids.

H représente, une fois l'assemblage intégré au pneumatique, la hauteur radiale moyenne de l'espace annulaire intérieur délimité radialement par la face interne du premier tissu et la face interne du deuxième tissu en l'absence de charge appliquée au pneumatique et en l'absence de pression dans le pneumatique. Cette hauteur radiale est au moins égale à 0,5 fois la distance droite moyenne entre les deux faces pour une portion filaire porteuse au repos de sorte que, une fois l'assemblage agencé dans le pneumatique, l'assemblage est capable de porter la charge appliquée au pneumatique par la mise en tension d'une partie des éléments porteurs positionnés en dehors de l'aire de contact, les éléments porteurs positionnés dans l'aire de contact étant soumis à un flambage car soumis à un effort de compression et ne participant donc pas au port de la charge appliquée. Ainsi, dans l'invention, on a au minimum H=0,5×H0 et Art > (2π × H) / L, Art représentant l'allongement à force maximale du premier tissu mesuré selon la norme NF EN ISO 13934-1 de juillet 2013.

L'homme du métier sélectionnera une valeur de H en fonction du type de pneumatique qu'il conçoit et en fonction du port de charge qu'il souhaite obtenir.

De manière préférée, pour tout allongement du premier tissu selon la première direction générale (G1) inférieure ou égal à 2×π×H / L, des deuxièmes organes filaires sont non rompus. Préférentiellement, chaque deuxième organe filaire est non rompu. En d'autres termes, l'allongement à rupture des deuxièmes organes filaires au sein des premiers éléments filaires est au moins égal à 2×π×H / L. De préférence, l'allongement à rupture des deuxièmes organes filaires au sein des premiers éléments filaires est supérieur à celui des premiers organes filaires au sein des premiers éléments filaires. De manière préférée, l'allongement à rupture des deuxièmes organes filaires au sein des premiers éléments filaires est supérieur à 100%, préférentiellement supérieur à 150% et de manière préférée supérieur à 200%. L'allongement à rupture des deuxièmes organes filaires est mesuré au sein des premiers éléments filaires (c'est-à-dire en assemblage en un premier élément filaire) selon la norme ASTM D885/D885 MA de janvier 2010.

La ténacité du deuxième organe filaire est préférentiellement inférieure ou égale à 20 cN/tex, de préférence inférieure à 15 cN/tex, de manière préférée inférieure à 10 cN/tex. La ténacité du deuxième organe filaire est déterminée selon la norme ASTM D885/D885 MA de janvier 2010. Cette faible ténacité, associée au caractère plastique du deuxième organe filaire, permet à celui-ci de se déformer plastiquement très facilement sans rompre, sous faible contrainte, et confère par conséquent au premier tissu de l'assemblage selon l'invention une capacité à s'allonger selon la première direction générale (G1) de manière uniforme, homogène et sans à-coup au cours de l'étape de conformation imposée lors de la fabrication du pneumatique, sans retour élastique, ce qui réduit considérablement le risque d'obtenir une ébauche irrégulière avant cuisson.

De préférence, le deuxième organe filaire se déforme plastiquement sous une contrainte inférieure ou égale à 60 MPa, préférentiellement inférieure ou égale à 40 MPa. Cette contrainte de déformation permet d'avoir un premier élément filaire facilement déformable plastiquement lors des opérations nécessitant un allongement du premier tissu selon la première direction générale (G1). De manière préférée, le deuxième organe filaire se déforme plastiquement sous une contrainte supérieure ou égale à 10 MPa et de manière préférée supérieure ou égale à 15 MPa. Ceci permet d'avoir un premier élément filaire suffisamment rigide pour la constitution de l'assemblage. La contrainte de déformation plastique est déterminée selon la norme ASTM D885/D885 MA de janvier 2010.

De manière préférée, le deuxième organe filaire comprend au moins un brin multifilamentaire comprenant plusieurs monofilaments chacun constitué d'un matériau choisi parmi un polyester, un polyamide, une polycétone, de préférence choisi parmi un polyester, un polyamide, une polycétone et un assemblage de ces matériaux, plus préférentiellement en polyamide et très préférentiellement choisi parmi les polyamides aliphatiques tels que les nylons, en particulier les nylons PA4.6, PA6, PA6.6 ou encore PA6.10. Les organes filaires en nylon présentent avantageusement des allongements à rupture relativement élevés et des ténacités inférieures à des matériaux couramment utilisés tels que, par exemple, la rayonne.

De manière préférée, le deuxième organe filaire est sensiblement rectiligne et le premier organe filaire est enroulé sensiblement en hélice autour du deuxième organe filaire. Ainsi, lorsque le premier tissu est déformé selon sa direction principale, le deuxième organe filaire s'allonge en se déformant plastiquement tandis que le premier organe filaire se déploie.

Un deuxième organe filaire particulièrement adapté aux besoins de l'invention est par exemple un fil nylon de titre compris entre 20 et 30 tex et présentant une force à rupture comprise entre 200 et 250 cN tels que par exemple les fils « Webflex HEN » de la société Coats.

De manière préférée, le deuxième organe filaire étant sensiblement rectiligne, le premier organe filaire est enroulé en hélice autour du deuxième organe filaire et formant sensiblement périodiquement des boucles. Le premier élément filaire est très préférentiellement de type bouclé.

Les éléments filaires de type bouclé (« loop yarn » ou « boucle yarn ») sont bien connus de l'Homme du métier. Ils diffèrent des éléments filaires de type guipé (ou « gimp yarn ») en ce que le premier organe filaire, couramment appelé « fil de couverture » ou « fil d'effet », est surralimenté lors de la fabrication de l'élément filaire. Les éléments filaires de type bouclé peuvent être produits par les procédés classiques tels que des métiers à anneaux, qui permettent de mettre en oeuvre des deuxièmes organes filaires de plus faible ténacité qu'avec les procédés de type machine à âme cassante avec lesquels sont produits les éléments filaires de type guipé.

Ainsi, en utilisant des premiers éléments filaires de chaîne de type bouclé, on peut mettre en oeuvre dans l'assemblage selon l'invention des deuxièmes organes filaires se déformant plastiquement sous faible contrainte, ce qui permet une déformation plus facile, uniforme et homogène du premier tissu de l'assemblage selon l'invention lors de l'opération de conformation.

### Deuxième tissu de l'assemblage

Dans un mode de réalisation, le deuxième tissu comprend :
- des deuxièmes éléments filaires, dits de chaine, sensiblement parallèles entre eux et s'étendant selon une deuxième direction, dite de chaine, et
- des deuxièmes éléments filaires, dits de trame, sensiblement parallèles entre eux et s'étendant selon une deuxième direction, dite de trame et s'entrecroisant avec les deuxièmes éléments filaires de chaine.

Dans ce mode de réalisation préférentiel, le deuxième tissu comprend, de manière connue de l'homme du métier, une armure caractérisant l'entrecroisement des deuxièmes éléments filaires de chaine et de trame. Selon les modes de réalisation, cette armure est de type toile, serge ou satin. De façon préférée, afin de conférer de bonnes propriétés mécaniques pour une utilisation en pneumatique, l'armure est de type toile.

De manière préférée, les deuxièmes directions de chaine et de trame forment l'une avec l'autre un angle allant de 70° à 90°, de préférence sensiblement égal à 90°.

Préférentiellement, le deuxième tissu s'étend selon une deuxième direction générale, la deuxième direction de chaine des deuxièmes éléments filaires étant sensiblement parallèle à la deuxième direction générale. Un tel deuxième tissu permet un procédé de fabrication de l'assemblage et du pneumatique largement facilité.

Dans un autre mode de réalisation, le deuxième tissu est un tricot comprenant des boucles entrelacées.

Dans un mode de réalisation, chaque élément filaire porteur comprend une deuxième portion filaire d'ancrage de chaque élément filaire porteur dans le deuxième tissu prolongeant la portion filaire porteuse dans le deuxième tissu.

Préférentiellement, chaque deuxième portion filaire d'ancrage est entrelacée avec le deuxième tissu. Un tel assemblage présente l'avantage de pouvoir être fabriqué en une seule étape. Toutefois, il est également possible d'envisager de fabriquer l'assemblage en deux étapes, une première étape de fabrication du deuxième tissu et une deuxième étape d'entrelacement du ou des éléments filaires porteurs avec le deuxième tissu. Dans les deux cas, l'entrelacement de chaque élément porteur avec le deuxième tissu permet d'assurer l'ancrage mécanique de chaque élément porteur dans le deuxième tissu et ainsi de conférer les propriétés mécaniques souhaitées à la structure porteuse.

Dans un mode de réalisation, afin d'assurer l'ancrage mécanique de la portion filaire d'ancrage, chaque deuxième portion filaire d'ancrage est enroulée au moins en partie autour d'au moins un deuxième élément filaire du deuxième tissu.

De manière préférée, le deuxième tissu comprend :
- des deuxièmes éléments filaires, dits de chaine, sensiblement parallèles entre eux et s'étendant selon une deuxième direction, dite de chaine, et
- des deuxièmes éléments filaires, dits de trame, sensiblement parallèles entre eux et s'étendant selon une deuxième direction, dite de trame et s'entrecroisant avec les deuxièmes éléments filaires de chaine,
chaque deuxième portion filaire d'ancrage étant enroulée au moins en partie autour d'au moins un deuxième élément filaire de trame du deuxième tissu, de préférence autour d'au moins deux deuxièmes éléments filaire de trame adjacents selon la deuxième direction générale.

Dans un mode de réalisation, chaque deuxième portion filaire d'ancrage s'étend selon une direction sensiblement parallèle à la deuxième direction générale.

De préférence, chaque deuxième portion filaire d'ancrage passe alternativement d'une face du deuxième tissu à l'autre face du deuxième tissu entre deux deuxièmes éléments filaires de trame adjacents autour desquels la deuxième portion filaire d'ancrage s'enroule.

Très préférentiellement, les deuxièmes éléments filaires de chaine s'étendent continûment sur toute la longueur du deuxième tissu.

### Structure porteuse

L'assemblage selon l'invention comprend une structure porteuse comprenant des éléments filaires porteurs reliant le premier tissu au deuxième tissu, chaque élément filaire porteur comprenant au moins une portion filaire porteuse s'étendant entre le premier et le deuxième tissu.

Par élément filaire porteur, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé. Lorsque sa section transversale est de forme circulaire, le diamètre de cette section est de préférence inférieur à 5 mm, plus préférentiellement compris dans un domaine allant de 100 µm à 1,2 mm.

Chaque élément filaire porteur, notamment chaque portion filaire porteuse qui relie les faces internes des premier et deuxième tissus l'un à l'autre, peut être caractérisé géométriquement par sa longueur au repos LP et par sa section moyenne SP, qui est la moyenne des sections obtenues par la coupe de la portion filaire porteuse par toutes les surfaces parallèles aux premier et deuxième tissus et comprises entre les premier et deuxième tissus. Dans le cas le plus fréquent d'une section constante de l'élément porteur et de la portion filaire porteuse, la section moyenne SP est égale à cette section constante.

Chaque élément filaire porteur, notamment chaque portion porteuse, présente typiquement une plus petite dimension caractéristique E de sa section moyenne SP, préférentiellement au plus égale à 0.02 fois l'espacement maximal entre les deux faces internes des premier et deuxième tissus (qui correspond à la hauteur radiale moyenne H de l'espace annulaire intérieur une fois l'assemblage agencé au sein du pneumatique en l'absence de charge appliquée au pneumatique et en l'absence de pression dans le pneumatique) et un rapport de forme R de sa section moyenne SP préférentiellement au plus égal à 3. Une plus petite dimension caractéristique E de la section moyenne SP de l'élément porteur au plus égale à 0.02 fois la hauteur radiale moyenne H de l'espace annulaire intérieur exclut tout élément porteur massif, ayant un volume important. En d'autres termes, lorsqu'il est filaire, chaque élément porteur a un élancement élevé, selon la direction radiale, lui permettant de flamber au passage dans l'aire de contact. En dehors de l'aire de contact, chaque élément porteur retrouve sa géométrie initiale, car son flambage est réversible. Un tel élément porteur a une bonne tenue à la fatigue.

Un rapport de forme R de sa section moyenne SP au plus égal à 3 signifie que la plus grande dimension caractéristique V de sa section moyenne SP est au plus égale à 3 fois la plus petite dimension caractéristique E de sa section moyenne SP. À titre d'exemples, une section moyenne SP circulaire, ayant un diamètre égal à d, a un rapport de forme R=1, une section moyenne SP rectangulaire, ayant une longueur V et une largeur V', a un rapport de forme R=V/V', et une section moyenne SP elliptique, ayant un grand axe B et un petit axe B', a un rapport de forme R=B/B'.

Un élément porteur filaire a un comportement mécanique de type filaire, c'est-à-dire qu'il ne peut être soumis qu'à des efforts d'extension ou de compression selon sa ligne moyenne.

Il est à noter que tous les éléments filaires porteurs d'une structure porteuse n'ont pas nécessairement des longueurs au repos LP identiques.

Dans un mode de réalisation préféré, la structure porteuse comprend une pluralité d'éléments filaires porteurs identiques, c'est-à-dire dont les caractéristiques géométriques et les matériaux constitutifs sont identiques.

Les éléments filaires porteurs sont agencés de sorte qu'ils sont deux à deux non liés mécaniquement dans un espace délimité par les premier et deuxième tissus. Ainsi, les éléments porteurs ont des comportements mécaniques indépendants. Par exemple, les éléments porteurs ne sont pas liés entre eux de façon à former un réseau ou un treillis.

De façon préférée, K'×H0 ≤ H < H0 avec K'=0,5 de sorte que, en l'absence de charge appliquée au pneumatique et en l'absence de pression dans le pneumatique, chaque portion filaire porteuse est dans un état replié. De manière préférentielle, K'=0,75, préférentiellement K'=0,80.

Plus K' se rapproche de 1, plus les portions filaires porteuses sont, en l'absence de charge appliquée au pneumatique et en l'absence de pression dans le pneumatique, proches de leur état au repos. Très préférentiellement, K=0,90 ce qui permet un port optimisé de la charge.

Dans un mode de réalisation préféré, chaque élément filaire porteur est textile. Par textile, on entend que chaque élément filaire porteur est non métallique, par exemple réalisé dans un matériau choisi parmi un polyester, un polyamide, une polycétone, un alcool polyvinylique, une cellulose, une fibre minérale, une fibre naturelle, un matériau élastomérique ou un mélange de ces matériaux. Parmi les polyesters on citera par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides, on citera les polyamides aliphatiques tels que les polyamides 4-6, 6, 6-6 (nylon), 11 ou 12 et les polyamides aromatiques tels que l'aramide.

Par exemple, chaque élément filaire porteur est un assemblage textile comprenant une ou plusieurs fibres mono-filamentaire ou multi-filamentaires textiles, retordues ensemble ou non. Ainsi, dans un mode de réalisation, on pourra avoir un assemblage dans lequel les fibres sont sensiblement parallèles les unes aux autres. Dans un autre mode de réalisation, on pourra avoir également un assemblage dans lequel les fibres sont enroulées en hélice. Dans encore un autre mode de réalisation, chaque élément filaire porteur est constitué d'un monofilament. Chaque fibre mono-filamentaire ou multi-filamentaire présente un diamètre compris entre 5 et 20 µm, par exemple 10 µm.

Dans un autre mode de réalisation, chaque élément filaire porteur est métallique, par exemple un assemblage de monofilaments métalliques, chaque monofilament métallique présentant un diamètre typiquement inférieur à 50 µm, par exemple 10 µm. Dans un mode de réalisation, chaque élément filaire porteur est constitué d'un assemblage de plusieurs monofilaments métalliques. Dans un autre mode de réalisation, chaque élément filaire porteur est constitué d'un monofilament métallique.

Dans un mode de réalisation, chaque élément filaire porteur s'étend alternativement du premier tissu vers le deuxième tissu et du deuxième tissu vers le premier tissu lorsqu'on se déplace le long de l'élément filaire porteur.

Dans un mode de réalisation, chaque élément filaire porteur comprend une première portion filaire d'ancrage de chaque élément filaire porteur dans le premier tissu prolongeant la portion filaire porteuse dans le premier tissu.

Préférentiellement, chaque première portion filaire d'ancrage est entrelacée avec le premier tissu. Un tel assemblage présente l'avantage de pouvoir être fabriqué en une seule étape. Toutefois, il est également possible d'envisager de fabriquer l'assemblage en deux étapes, une première étape de fabrication du premier tissu et une deuxième étape d'entrelacement du ou des éléments filaires porteurs avec le premier tissu. Dans les deux cas, l'entrelacement de chaque élément porteur avec le premier tissu permet d'assurer l'ancrage mécanique de chaque élément filaire porteur dans le premier tissu et ainsi de conférer les propriétés mécaniques souhaitées à la structure porteuse.

Dans un mode de réalisation, afin d'assurer l'ancrage mécanique de la portion filaire d'ancrage, chaque première portion filaire d'ancrage est enroulée au moins en partie autour d'au moins un premier élément filaire du premier tissu.

De manière préférée, le premier tissu comprend :
- des premiers éléments filaires, dits de chaine, sensiblement parallèles entre eux et s'étendant selon une première direction, dite de chaine, sensiblement parallèle à la première direction générale, et
- des premiers éléments filaires, dits de trame, sensiblement parallèles entre eux et s'étendant selon une première direction, dite de trame, et s'entrecroisant avec les premiers éléments filaires de chaine,
chaque première portion filaire d'ancrage étant enroulée au moins en partie autour d'au moins un premier élément filaire de trame du premier tissu, de préférence autour d'au moins deux premiers éléments filaire de trame adjacents selon la première direction générale.

Dans un mode de réalisation, chaque première portion filaire d'ancrage s'étend selon une direction sensiblement parallèle à la première direction générale.

De préférence, chaque première portion filaire d'ancrage passe alternativement d'une face du premier tissu à l'autre face du premier tissu entre deux premiers éléments filaires de trame adjacents autour desquels la première portion filaire d'ancrage s'enroule.

### Zones du tissu

Dans un mode de réalisation préféré permettant d'assurer efficacement la conformation du premier tissu de l'assemblage selon l'invention, le premier tissu comprend :
- un premier groupe de zones comprenant au moins une zone droite transversale (Z1), chaque zone droite transversale (Z1) du premier groupe de zones étant agencée de façon à permettre un allongement sans rupture d'au moins une zone droite transversale (Z1) du premier groupe de zones selon la première direction générale (G1),
- un deuxième groupe de zones comprenant au moins une zone droite transversale (Z2), chaque zone droite transversale (Z2) du deuxième groupe de zones étant agencée de façon à empêcher une rupture de ladite zone droite transversale (Z2).

Par définition, une zone droite transversale du tissu est délimitée longitudinalement par deux droites imaginaires sensiblement perpendiculaires à la première direction générale du tissu. Une zone droite transversale s'étend sur toute la largeur du tissu, c'est-à-dire que la zone droite transversale est délimitée transversalement par les bords longitudinaux du tissu.

De préférence, chaque zone droite transversale du premier groupe de zones est agencée de façon à permettre un allongement sans rupture de chaque zone droite transversale du premier groupe de zones selon la première direction générale pour toute contrainte non nulle inférieure ou égale à (P0 × (L/2π + H) × 1) / 2 exercée sur le premier tissu selon la première direction général, et pour tout allongement du premier tissu selon la première direction générale inférieur ou égal à 2×π×H / L.

De préférence, chaque zone droite transversale du deuxième groupe de zones est agencée de façon à empêcher une rupture de chaque zone droite transversale du deuxième groupe de zones pour toute contrainte non nulle inférieure ou égale à (P0 × (L/2π + H) × 1) / 2 exercée sur le premier tissu selon la première direction générale, et pour tout allongement du premier tissu selon la première direction générale inférieur ou égal à 2×π×H / L.

Dans un mode de réalisation permettant d'obtenir des zones droites transversales du deuxième groupe de zones indéformables, chaque zone droite transversale du deuxième groupe de zones est agencée de façon à empêcher un allongement de chaque zone droite transversale du deuxième groupe de zones selon la première direction générale, en particulier et de préférence pour toute contrainte non nulle inférieure ou égale à (P0 × (L/2π + H) × 1) / 2 exercée sur le premier tissu selon la première direction générale, et pour tout allongement du premier tissu selon la première direction générale inférieur ou égal à 2×π×H / L.

Dans un autre mode de réalisation permettant d'obtenir des zones droites transversales du deuxième groupe de zones déformables, chaque zone droite transversale du deuxième groupe de zones est agencée de façon à permettre un allongement de chaque zone droite transversale du deuxième groupe de zones selon la première direction générale, cet allongement étant préférentiellement au plus égal à 20%, de préférence à 15%, et plus préférentiellement à 10% de l'allongement de chaque zone droite transversale du premier groupe de zones selon la première direction générale, en particulier et de préférence pour toute contrainte non nulle inférieure ou égale à (P0 × (L/2π + H) × 1) / 2 exercée sur le premier tissu selon la première direction générale, et pour tout allongement du premier tissu selon la première direction générale inférieur ou égal à (2π × H) / L.

De préférence, chaque zone droite transversale du premier groupe de zones est agencée de façon à permettre un allongement sans rupture de chaque premier élément filaire de chaine selon la première direction générale dans chaque zone droite transversale du premier groupe de zones, en particulier et de préférence pour toute contrainte non nulle inférieure ou égale à (P0 × (L/2π + H) × 1) / 2 exercée sur le premier tissu selon la première direction générale, et pour tout allongement du premier tissu selon la première direction générale inférieur ou égal à (2π × H) / L.

De manière préférée, chaque zone droite transversale (Z1) du premier groupe de zones est agencée de façon à permettre un écartement des éléments filaire de trame les uns par rapport aux autres selon la première direction générale dans chaque zone droite transversale du premier groupe de zones, en particulier et de préférence pour toute contrainte non nulle inférieure ou égale à (P0 × (L/2π + H) × 1) / 2 exercée sur le premier tissu selon la première direction générale, et pour tout allongement du premier tissu selon la première direction générale inférieur ou égal à (2π × H) / L.

Dans un mode de réalisation préféré, chaque zone droite transversale (Z2) du deuxième groupe de zones est agencée de façon à empêcher une rupture de chaque premier élément filaire de chaine dans chaque zone droite transversale (Z2) du deuxième groupe de zones, en particulier et de préférence pour toute contrainte non nulle inférieure ou égale à (P0 × (L/2π + H) × 1) / 2 exercée sur le premier tissu selon la première direction générale, et pour tout allongement du premier tissu selon la première direction générale inférieur ou égal à (2π × H) / L.

Dans un mode de réalisation permettant d'obtenir des zones droites transversales (Z2) du deuxième groupe de zones indéformables, chaque zone droite transversale (Z2) du deuxième groupe de zones est agencée de façon à empêcher un allongement de chaque premier élément filaire de chaine selon la première direction générale dans chaque zone droite transversale (Z2) du deuxième groupe de zones, en particulier et de préférence pour toute contrainte non nulle inférieure ou égale à (P0 × (L/2π + H) × 1) / 2 exercée sur le premier tissu selon la première direction générale, et pour tout allongement du premier tissu selon la première direction générale inférieur ou égal à (2π × H) / L.

Dans un autre mode de réalisation permettant d'obtenir des zones droites transversales (Z2) du deuxième groupe de zones déformables, chaque zone droite transversale (Z2) du deuxième groupe de zones est agencée de façon à permettre un allongement de chaque premier élément filaire de chaine selon la première direction générale dans chaque zone droite transversale (Z2) du deuxième groupe de zones, cet allongement étant préférentiellement au plus égal à 20%, de préférence à 15%, et plus préférentiellement à 10% de l'allongement de chaque premier élément filaire de chaine selon la première direction générale dans chaque zone droite transversale (Z2) du premier groupe de zones, en particulier et de préférence pour toute contrainte non nulle inférieure ou égale à (P0 × (L/2π + H) × 1) / 2 exercée sur le premier tissu selon la première direction générale, et pour tout allongement du premier tissu selon la première direction générale inférieur ou égal à (2π × H) / L.

Optionnellement, dans le mode de réalisation utilisant des zones droites transversales (Z2) du deuxième groupe de zones indéformables, chaque zone droite transversale (Z2) du deuxième groupe de zones est agencée de façon à empêcher un écartement des premiers éléments filaire de trame les uns par rapport aux autres selon la première direction générale dans chaque zone droite transversale (Z2) du deuxième groupe de zones, en particulier et de préférence pour toute contrainte non nulle inférieure ou égale à (P0 × (L/2π + H) × 1) / 2 exercée sur le premier tissu selon la première direction générale, et pour tout allongement du premier tissu selon la première direction générale inférieur ou égal à (2π × H) / L.

Optionnellement, dans le mode de réalisation utilisant des zones droites transversales (Z2) du deuxième groupe de zones déformables, chaque zone droite transversale (Z2) du deuxième groupe de zones est agencée de façon à permettre un écartement des premiers éléments filaire de trame les uns par rapport aux autres selon la première direction générale dans chaque zone droite transversale (Z2) du deuxième groupe de zones, en particulier et de préférence pour toute contrainte non nulle inférieure ou égale à (P0 × (L/2π + H) × 1) / 2 exercée sur le premier tissu selon la première direction générale, et pour tout allongement du premier tissu selon la première direction générale inférieur ou égal à (2π × H) / L.

Dans les modes de réalisation préférés décrits ci-dessus, chaque zone droite transversale (Z1) du premier groupe de zones est une zone dite déformable. De telles zones sont déformables dans les conditions de conformation et participent à la conformabilité du premier tissu. Chaque zone droite transversale (Z2) du deuxième groupe de zones est une zone dite non rompable. Optionnellement, dans un mode de réalisation, chaque zone droite transversale (Z2) du deuxième groupe de zones est indéformable. Dans un autre mode de réalisation, chaque zone droite transversale (Z2) du deuxième groupe de zones est déformable mais dans une bien moindre mesure que chaque zone droite transversale (Z1) du premier groupe de zones. De telles zones sont non rompables dans les conditions de conformation et ne participent pas ou peu à la conformabilité du premier tissu. Ainsi, chaque zone droite transversale (Z1) dite déformable du premier groupe de zones se déforme suffisamment pour permettre la conformation de l'assemblage et compense le non allongement ou le faible allongement des zones droites transversales (Z2) non rompables du deuxième groupe de zones. L'allongement à force maximale de l'ensemble des zones droites transversales du premier groupe de zones sera d'autant plus grand que les zones droites transversales dites déformables du premier groupe de zones sont courtes et peu nombreuses par rapport aux zones droites transversales non rompables du deuxième groupe de zones. À l'échelle des éléments filaires de chaine, les portions de chaque premier élément filaire de chaine situées dans chaque zone droite transversale (Z1) dite déformable du premier groupe de zones se déforment suffisamment pour permettre la conformation de l'assemblage et compensent le non allongement ou le faible allongement des portions de chaque premier élément filaire de chaine situées dans les zones droites transversales (Z2) non rompables du deuxième groupe de zones.

Aussi, chaque zone dite déformable du premier groupe de zones est déformable sous une contrainte relativement faible ce qui permet, lors du procédé de fabrication du pneumatique, d'utiliser une contrainte de conformation adaptée ne risquant pas de détériorer l'ébauche.

Ainsi, dans un mode de réalisation préféré, toutes les zones droites transversales (Z1) du premier groupe de zones sont identiques et l'allongement à force maximale Art1 de chaque zone droite transversale (Z1) du premier groupe de zones selon la première direction générale vérifie Art1 > (2π × H) / SLd1 avec SLd1 étant la somme des longueurs au repos Ld1 de toutes les zones droites transversales (Z1) du premier groupe de zones. L'allongement à force maximale est mesuré conformément à la norme NF EN ISO 13934-1 de juillet 2013 sur des échantillons de zones droites transversales (Z1) du premier groupe de zones.

Ainsi, avantageusement, dans le mode de réalisation précédent, l'allongement à rupture Arc de chaque premier élément filaire de chaine vérifie Arc > (2π × H) / SLd1. L'allongement à rupture Arc est mesuré selon la norme ASTM D885/D885 MA de janvier 2010.

De préférence, pour tout allongement de chaque zone droite transversale (Z1) du premier groupe de zones selon la première direction générale inférieur ou égal à (2π × H) / SLd1, le premier tissu développe une force, exprimée en N, selon la première direction générale inférieure ou égale à (P0 × (L/2π + H) × 1) / 2, SLd1 étant la somme des longueurs au repos de toutes les zones droites transversales (Z1) du premier groupe de zones exprimée en m. L'allongement, la contrainte exercée et la force développée sont déterminés conformément à la norme NF EN ISO 13934-1 de juillet 2013.

Dans un mode de réalisation préféré, chaque élément filaire porteur comprend une première portion filaire d'ancrage de chaque élément filaire porteur dans le premier tissu prolongeant la portion filaire porteuse dans le premier tissu :
- chaque zone droite transversale (Z1) du premier groupe de zones étant dépourvue de toute première portion filaire d'ancrage,
- chaque zone droite transversale (Z2) du deuxième groupe de zones comprenant au moins une première portion filaire d'ancrage.

De préférence, chaque zone droite transversale (Z2) du deuxième groupe de zones est agencée de façon à empêcher une rupture de chaque première portion filaire d'ancrage, en particulier et de préférence pour toute contrainte non nulle inférieure ou égale à (P0 × (L/2π + H) × 1) / 2 exercée sur le premier tissu selon la première direction générale, et pour tout allongement du premier tissu selon la première direction générale inférieur ou égal à (2π × H) / L.

Ainsi, chaque zone droite transversale (Z2) comprenant au moins une première portion filaire d'ancrage est non rompable et ce, même sous une contrainte relativement élevée ce qui permet, lors du procédé de fabrication du pneumatique, d'utiliser une contrainte de conformation adaptée ne risquant pas de détériorer l'ébauche.

Dans un mode de réalisation, chaque zone droite transversale (Z2) du deuxième groupe de zones est agencée de façon à empêcher un allongement de chaque première portion filaire d'ancrage selon la première direction générale, en particulier et de préférence pour toute contrainte non nulle inférieure ou égale à (P0 × (L/2π + H) × 1) / 2 exercée sur le premier tissu selon la première direction générale, et pour tout allongement du premier tissu selon la première direction générale inférieur ou égal à (2π × H) / L.

Dans un autre mode de réalisation, chaque zone droite transversale (Z2) du deuxième groupe de zones est agencée de façon à permettre un allongement de chaque première portion filaire d'ancrage selon la première direction générale, en particulier et de préférence pour toute contrainte non nulle inférieure ou égale à (P0 × (L/2π + H) × 1) / 2 exercée sur le premier tissu selon la première direction générale, et pour tout allongement du premier tissu selon la première direction générale inférieur ou égal à (2π × H) / L.

Avantageusement, P0=80000 Pa, de préférence P0=60000 Pa, plus préférentiellement P0=40000 Pa. Plus P0 est petit, plus il est possible d'utiliser des contraintes petites lors du procédé de fabrication du pneumatique et moins on risque de détériorer l'ébauche lors de ce procédé.

De façon préférée, chaque zone droite transversale (Z1) du premier groupe de zones alterne, selon la première direction générale, avec une zone droite transversale (Z2) du deuxième groupe de zones.

Ainsi, à l'échelle du premier tissu, on obtient une déformation homogène de l'ensemble du premier tissu, cette déformation étant d'autant plus homogène que la longueur au repos de chaque zone droite transversale selon la première direction générale est petite. Par longueur au repos d'une zone droite transversale selon la première direction générale, on entend la longueur de la zone selon la direction longitudinale en l'absence de toute contrainte extérieure exercée sur la zone (autre que la pression atmosphérique). Une zone droite transversale au repos selon la première direction générale n'est ni en extension ni en compression selon cette direction et présente donc un allongement nul selon cette direction.

L'assemblage selon l'invention peut être écru, c'est-à-dire dépourvu de toute composition adhésive destinée à favoriser l'adhésion entres les premiers éléments filaires du premier tissu et/ou les deuxièmes éléments filaires du deuxième tissu avec une composition d'élastomère. L'assemblage selon l'invention peut également être adhérisé, c'est-à-dire revêtu au moins en partie d'au moins une composition adhésive favorisant une telle adhésion. Dans un mode de réalisation à deux couches, chaque premier et deuxième élément filaire à encoller est revêtu d'une couche d'un primaire d'adhésion, elle-même revêtue d'une couche de composition adhésive. Dans un mode de réalisation à une couche, chaque premier et deuxième élément filaire à encoller est directement revêtu d'une couche de composition adhésive. Un exemple de primaire d'adhésion est une résine époxy et/ou un composé isocyanate, éventuellement bloqué. La composition adhésive utilisée pourra être une colle RFL classique (Résorcinol-formaldéhyde-latex) ou bien encore les colles décrites dans les demandes WO 2013/017421, WO 2013/017422, WO 2013/017423, WO2015007641 et WO2015007642.

### Assemblage imprégné

Un autre objet de l'invention est un assemblage imprégné, de préférence pour pneumatique, le premier tissu étant imprégné au moins en partie d'une première composition polymérique, et le deuxième tissu étant imprégné au moins en partie d'une deuxième composition polymérique.

Par « imprégné », on entend que chaque composition polymérique pénètre au moins en surface le tissu. On peut donc avoir une imprégnation unifaciale avec une couverture d'une face du tissu par la composition polymérique ou une imprégnation bifaciale avec une couverture des deux faces du tissu par la composition polymérique. Dans les deux cas, l'imprégnation permet de créer un ancrage mécanique grâce à la pénétration de la composition polymérique dans les interstices présents dans les tissus.

Dans un mode de réalisation, chaque composition polymérique comprend au moins un élastomère, de préférence un élastomère diénique. Par élastomère ou caoutchouc (les deux termes étant synonymes) du type diénique, on entend de manière générale un élastomère issu au moins en partie (i.e. un homopolymère ou un copolymère) de monomères diènes (monomères porteurs de deux doubles liaisons carbone-carbone, conjuguées ou non). Cette composition peut alors se trouver à l'état crue ou à l'état cuit.

De manière particulièrement préférentielle, l'élastomère diénique de la composition de caoutchouc est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Chaque composition polymérique peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

Par ailleurs, dans ce mode de réalisation, chaque composition polymérique comprend, en plus de l'élastomère, de préférence diénique, une charge renforçante, par exemple du noir de carbone, un système de réticulation, par exemple un système de vulcanisation et des additifs divers.

Dans un autre mode de réalisation, chaque composition polymérique comprend au moins un polymère thermoplastique. Un polymère thermoplastique est par définition thermofusible. Des exemples de tels polymères thermoplastiques sont les polyamides aliphatiques, par exemple le nylon, les polyesters, par exemple le PET ou le PEN, et les élastomères thermoplastiques.

Les élastomères thermoplastiques (en abrégé "TPE") sont des élastomères se présentant sous la forme de copolymères blocs à base de blocs thermoplastiques. De structure intermédiaire entre polymères thermoplastiques et élastomères, ils sont constitués de manière connue de séquences rigides thermoplastiques, notamment polystyrène reliées par des séquences souples élastomère, par exemple polybutadiène ou polyisoprène pour des TPE insaturés ou poly(éthylène/butylène) pour des TPE saturés. C'est la raison pour laquelle, de manière connue, les copolymères blocs TPE ci-dessus se caractérisent généralement par la présence de deux pics de transition vitreuse, le premier pic (température la plus basse, généralement négative) étant relatif à la séquence élastomère du copolymère TPE, le second pic (température la plus haute, positive, typiquement supérieure à 80°C pour des élastomères préférentiels du type TPS) étant relatif à la partie thermoplastique (par exemple blocs styrène) du copolymère TPE. Ces élastomères TPE sont souvent des élastomères triblocs avec deux segments rigides reliés par un segment souple. Les segments rigides et souples peuvent être disposés linéairement, en étoile ou branchés. Ces élastomères TPE peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

De préférence, l'élastomère thermoplastique est insaturé. Par élastomère TPE insaturé, on entend par définition et de manière bien connue un élastomère TPE qui est pourvu d'insaturations éthyléniques, c'est-à-dire qui comporte des doubles liaisons carbone-carbone (conjuguées ou non) ; réciproquement, un élastomère TPE dit saturé est bien entendu un élastomère TPE qui est dépourvu de telles doubles liaisons.

Les première et deuxième compositions polymériques peuvent être différentes ou identiques. Par exemple, la première composition polymérique peut comprendre un élastomère diénique et la deuxième composition polymérique peut comprendre un élastomère thermoplastique ou inversement.

### Article de caoutchouc

L'invention concerne également un article de caoutchouc comprenant un assemblage selon l'invention, ou un assemblage imprégné selon l'invention. Par article de caoutchouc, on entend tout type d'article de caoutchouc tel qu'un ballon, un objet non pneumatique, une bande transporteuse.

### Pneumatique

L'invention concerne également un pneumatique comprenant un assemblage selon l'invention, ou un assemblage imprégné selon l'invention.

L'assemblage selon l'invention, imprégné ou non, est particulièrement adapté pour être incorporé dans un pneumatique tel que décrit, par exemple, dans le document WO 2018/130782 ou encore te de manière préférée tel que décrit dans le document WO 2019/092343.

L'invention concerne en particulier un pneumatique comprenant un sommet ayant deux extrémités axiales prolongées chacune, radialement vers l'intérieur, par un flanc puis par un bourrelet destiné à entrer en contact avec une jante, l'ensemble constitué par le sommet, les deux flancs et les deux bourrelets délimitant une cavité torique intérieure et au moins un bourrelet, le pneumatique comprenant un assemblage selon l'un des arrangements quelconque de l'invention, destiné à reprendre au moins en partie la charge nominale Z appliquée au pneumatique monté sur sa jante et gonflé à sa pression nominale P, le premier tissu étant fixé sur la partie radialement intérieure du sommet et le deuxième tissu délimitant au moins partiellement la partie radialement intérieure de la cavité torique, la structure porteuse s'étendant continûment dans la cavité torique intérieure, de telle sorte que, lorsque le pneumatique est soumis à une charge nominale Z, les éléments filaires porteurs, reliés à une portion de pneumatique en contact avec le sol, sont soumis à un flambage en compression et au moins une partie des éléments filaires porteurs, reliés à la portion de pneumatique non en contact avec le sol, sont en tension.

Dans un arrangement particulier, la cavité torique est totalement délimitée en sa partie radialement intérieure par au moins un deuxième tissu d'un arrangement quelconque de l'assemblage selon l'invention.

Dans un autre arrangement particulier, la cavité torique est partiellement délimitée en sa partie radialement intérieure par au moins un deuxième tissu d'un arrangement quelconque de l'assemblage selon l'invention.

Ainsi, dans un mode préféré de cet arrangement particulier, un pneumatique selon l'invention sera un pneumatique, en particulier pour véhicule de tourisme, ayant une largeur axiale S, destiné à être gonflé à une pression nominale P et à être soumis à une charge nominale Z, comprenant :
- un sommet ayant deux extrémités axiales prolongées chacune, radialement vers l'intérieur, par un flanc puis par un bourrelet destiné à entrer en contact avec une jante, l'ensemble constitué par le sommet, les deux flancs et les deux bourrelets délimitant une cavité torique intérieure,
- éventuellement une armature de carcasse, reliant les deux flancs entre eux en s'étendant dans une portion radialement intérieure du sommet et étant ancrée, dans chaque bourrelet, à un élément circonférentiel de renforcement,
- au moins un bourrelet étant prolongé axialement vers l'intérieur par une semelle flexible en porte à faux comprenant une extrémité libre,
- la semelle flexible comprenant une portion d'ancrage au bourrelet et une portion courante rigide, s'étendant axialement vers l'intérieur à partir de la portion d'ancrage jusqu'à l'extrémité libre,
- le pneumatique comprenant un assemblage selon l'invention, destiné à reprendre au moins en partie la charge nominale Z appliquée au pneumatique monté sur sa jante et gonflé à sa pression nominale P,
- le premier tissu étant fixé sur la partie radialement intérieure du sommet et le deuxième tissu étant fixé sur la semelle flexible, la structure porteuse s'étendant continûment dans la cavité torique intérieure, de telle sorte que, lorsque le pneumatique est soumis à une charge nominale Z, les éléments filaires porteurs, reliés à une portion de pneumatique en contact avec le sol, sont soumis à un flambage en compression et au moins une partie des éléments filaires porteurs, reliés à la portion de pneumatique non en contact avec le sol, sont en tension.

### Méthodes de mesure

L'allongement à la force maximale est mesuré conformément à la norme NF EN ISO 13934-1 de juillet 2013. Cet allongement à la force maximale étant mesuré selon la première direction générale, il correspond à l'allongement du premier tissu à partir duquel au moins un premier élément filaire rompt. D'autres éléments filaires rompent sur la portion de l'allongement comprise entre l'allongement à la force maximale et l'allongement à rupture tels que définis dans la norme NF EN ISO 13934-1 de juillet 2013. Cette mesure pourra être effectuée sur un assemblage écru, un assemblage adhérisé ou bien extrait de pneumatique. De préférence, la mesure sera effectuée sur un assemblage écru ou adhérisé.

Dans la présente demande, les propriétés du premier tissu sont déterminées en soumettant le premier tissu à un essai en traction conformément à la norme NF EN ISO 13934-1 de juillet 2013. Les propriétés intrinsèques des éléments filaires sont déterminées en soumettant les éléments filaires à un essai en traction conformément à la norme ASTM D885/D885 MA de janvier 2010.

### Description des figures

L'invention est illustrée par les figures 1 à 5, non représentées à l'échelle et décrites ci-après :
[Fig.1] Coupe méridienne d'un pneumatique selon l'invention, avec deux semelles flexibles symétriques comprenant chacune une portion d'ancrage souple.
[Fig.2] Coupe circonférentielle d'un pneumatique selon l'invention, dans l'état écrasé.
[Fig.3] Vue du dessus l'assemblage selon l'invention avant son assemblage dans le pneumatique.
[Fig.4] Vu en coupe de l'assemblage selon l'invention selon le plan de coupe P-P' représenté sur la Fig.3 illustrant les éléments filaires porteurs dans un état replié.
[Fig.5] Différents premiers éléments filaires de chaîne utilisables dans l'assemblage selon l'invention.

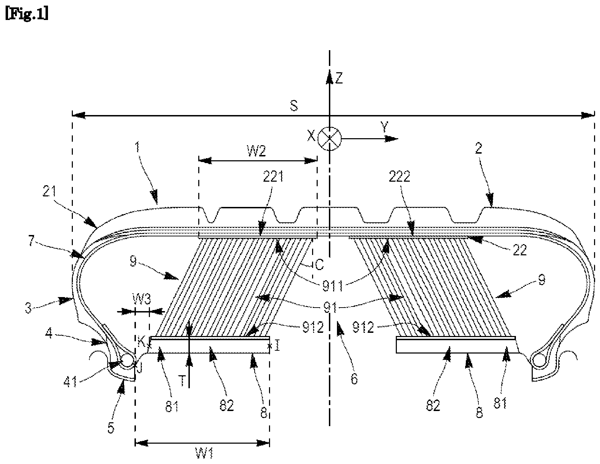

La **figure 1** représente la coupe méridienne d'un pneumatique 1 selon l'invention, avec deux semelles flexibles 8 symétriques comprenant chacune une portion d'ancrage 81 souple. Le pneumatique 1 comprend un sommet 2 ayant deux extrémités axiales 21 prolongées chacune, radialement vers l'intérieur, par un flanc 3 puis par un bourrelet 4 destiné à entrer en contact avec une jante 5, l'ensemble délimitant une cavité torique intérieure 6. Il comprend en outre une armature de carcasse 7, reliant les deux flancs 3 entre eux en s'étendant dans une portion radialement intérieure du sommet 2 et ancrée, dans chaque bourrelet 4, à un élément circonférentiel de renforcement 41. Chaque bourrelet 4 est prolongé axialement vers l'intérieur par une semelle flexible 8 en porte à faux comprenant une extrémité libre I. Les semelles flexibles 8 prolongeant chaque bourrelet 4 sont symétriques, par rapport à un plan équatorial XZ équidistant des extrémités axiales 21 du sommet 2, et structurellement identiques. Chaque semelle flexible 8 comprend une portion d'ancrage 81 au bourrelet et une portion courante 82 rigide, s'étendant axialement vers l'intérieur à partir de la portion d'ancrage 81 jusqu'à l'extrémité libre I. Dans le cas représenté, la portion d'ancrage 81, constituée par un prolongement d'armature de carcasse 7, a une rigidité K2 inférieure à la rigidité K1 de portion courante 82 rigide. La portion d'ancrage 81 de la semelle flexible 8 a une largeur axiale W3, mesurée entre le point J, le plus axialement extérieur de la semelle flexible 8 et en contact avec le bourrelet 4, et l'extrémité axialement extérieure K de la portion courante 82 de la semelle flexible 8. Chaque semelle flexible 8 a une largeur axiale W1, mesurée entre le point J, le plus axialement extérieur de la semelle flexible 8 et en contact avec le bourrelet 4, et l'extrémité libre axialement intérieure I de la semelle flexible 8. La portion courante 82 de la semelle flexible 8 a une épaisseur radiale moyenne T. Le pneumatique 1 comprend en outre une structure porteuse 9, destinée à reprendre au moins en partie la charge nominale Z appliquée au pneumatique monté sur sa jante 5 et gonflé à sa pression nominale P, comprenant des éléments filaires porteurs dont les portions filaires porteuses 91, deux à deux indépendantes, s'étendent continûment dans la cavité torique intérieure 6 entre un premier tissu 221, d'une largeur radiale W2, solidaire d'une interface 22 radialement intérieure du sommet et un deuxième tissu 912 relié à la semelle flexible 8, de telle sorte que, lorsque le pneumatique est soumis à une charge radiale nominale Z, les portions filaires porteuses 91, reliées à une portion de pneumatique en contact avec le sol, sont soumises à un flambage en compression et au moins une partie des portions filaires porteuses 91, reliées à la portion de pneumatique non en contact avec le sol, sont en tension. Les portions filaires porteuses 91 identiques forment, avec une direction radiale ZZ', un angle C au plus égal à 50°.

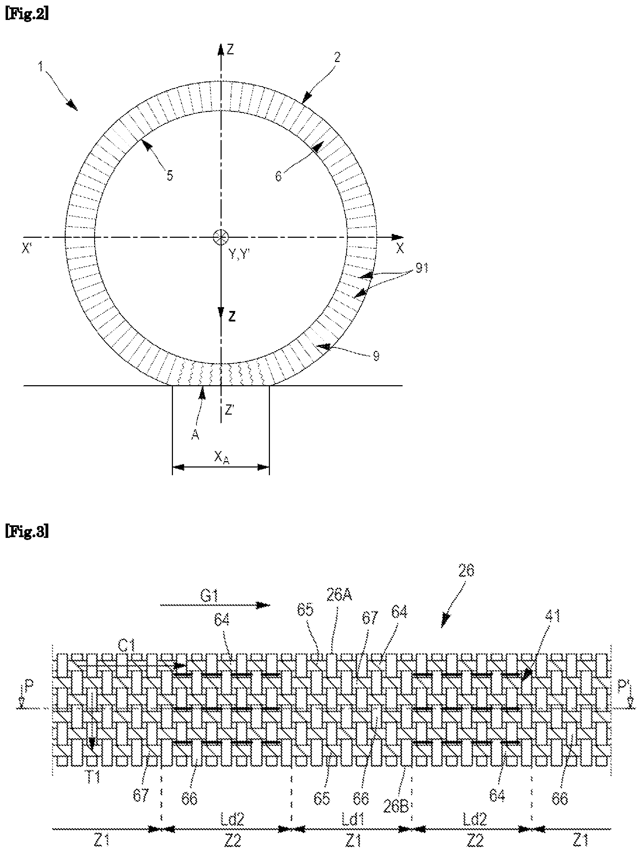

La **figure 2** présente une coupe circonférentielle d'un pneumatique 1 selon l'invention, monté sur une jante 5, dans son état gonflé écrasé, c'est-à-dire soumis à une pression nominale P et une charge radiale nominale Z. La structure porteuse 9 comprenant des éléments porteurs dont les portions filaires porteuses 91, deux à deux indépendantes, s'étendent continûment dans la cavité torique intérieure 6, à partir d'un premier tissu solidaire d'une interface radialement intérieure (non représentés) du sommet 2 jusqu'à un deuxième tissu solidaire de la semelle flexible (non représentés). Le pneumatique 1, soumis à une charge radiale nominale Z, est en contact avec un sol plan par une surface de contact A, ayant une longueur circonférentielle X_{A}. Les portions filaires porteuses 91, reliées à une portion de pneumatique en contact avec le sol, sont soumises à un flambage en compression et au moins une partie des portions filaires porteuses 91, reliées à la portion de pneumatique non en contact avec le sol, sont en tension.

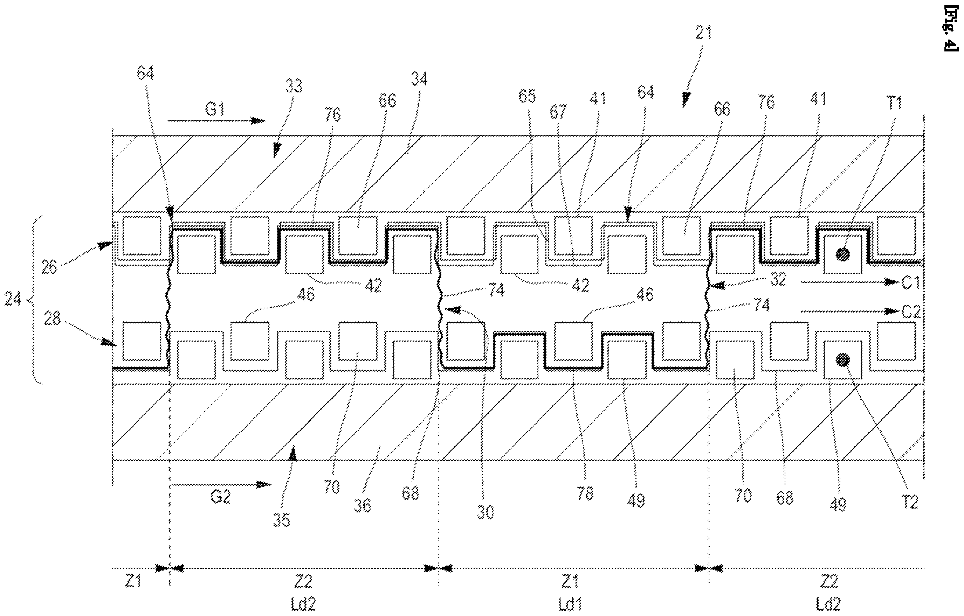

On représente sur les **figures 3** **et** **4** respectivement une vue de dessus d'un arrangement de l'assemblage 24 selon l'invention et une coupe d'un arrangement de l'assemblage selon un plan P-P' tel que représenté sur la **figure 3****.**

Le premier tissu 26 comprend deux bords longitudinaux 26A et 26B. Le premier tissu 26 s'étend selon une première direction générale G1 sensiblement parallèle à chaque bord longitudinal 26A, 26B. Le premier tissu 26 comprend des premiers éléments filaires 64, appelés premiers éléments filaires de chaine, et des premiers éléments filaires 66, appelés premiers éléments filaires de trame. Les premiers éléments filaires de chaine 64 du premier tissu 26 sont sensiblement parallèles entre eux et s'étendent selon une première direction dite de chaine C1, sensiblement parallèle à la première direction générale G1. Les premiers éléments filaires de trame 66 du premier tissu 26 sont sensiblement parallèles entre eux et s'étendent selon une première direction dite de trame T1 et s'entrecroisent avec les premiers éléments filaires de chaine 64. Les premiers éléments filaires de chaine 64 s'étendent continûment sur toute la longueur du premier tissu 26.

De façon analogue au premier tissu 26, le deuxième tissu 28 comprend deux bords longitudinaux 28A et 28B. Le deuxième tissu 28 s'étend selon une deuxième direction générale G2 sensiblement parallèle à chaque bord longitudinal 28A, 28B. En l'espèce, la deuxième direction générale G2 est sensiblement parallèle à la première direction générale G1. Le deuxième tissu 28 comprend des deuxièmes éléments filaires 68, appelés deuxièmes éléments filaires de chaine, et des deuxièmes éléments filaires 70, appelés deuxièmes éléments filaires de trame. Les deuxièmes éléments filaires de chaine 68 du deuxième tissu 28 sont sensiblement parallèles entre eux et s'étendent selon une deuxième direction dite de chaine C2, sensiblement parallèle à la deuxième direction générale G2. Les deuxièmes éléments filaires de trame 70 du deuxième tissu 28 sont sensiblement parallèles entre eux et s'étendent selon une deuxième direction dite de trame T2 et s'entrecroisent avec les deuxièmes éléments filaires de chaine 68. Les deuxièmes éléments filaires de chaine 68 s'étendent continûment sur toute la longueur du premier tissu 28.

Au sein de chaque premier et deuxième tissu 26, 28, les directions de chaine et de trame forment l'une avec l'autre un angle allant de 70° à 90°. En l'espèce, l'angle est sensiblement égal à 90°.

Au sein du pneumatique 1, chaque première et deuxième direction de chaine forme un angle inférieur ou égal à 10° avec la direction circonférentielle XX' du pneumatique 1. Dans le premier mode de réalisation, chaque première et deuxième direction de chaine forme un angle sensiblement nul avec la direction circonférentielle XX' du pneumatique 1.

Chaque élément filaire 64, 66, 68, 70 est un élément filaire textile.

Les éléments filaires 64 sont tous sensiblement identiques. Chaque premier élément filaire 64 de chaine comprend des premier et deuxième organes filaires 65, 67. Le deuxième organe filaire 67 est sensiblement rectiligne et le premier organe filaire 65 est enroulé sensiblement en hélice autour du deuxième organe filaire 67 en formant des boucles de façon sensiblement périodique (non représentées). Ici le premier organe filaire 65 est un brin multifilamentaire en PET présentant un titre égal à 110 tex et le deuxième organe filaire 67 est un brin monofilamentaire en nylon présentant un titre égal à 21 tex et une ténacité égale à 9 cN/tex.

Les éléments filaires 66, 68, 70 sont tous sensiblement identiques, ici réalisés en polyéthylène téréphtalate (PET). En l'espèce, chaque élément filaire 66, 68, 70 est un élément filaire filé présentant une masse linéique égale à 170 tex et une ténacité égale à 66 cN/tex.

L'assemblage 24 comprend une structure porteuse 30 comprenant des éléments filaires porteurs 32. Chaque élément filaire porteur 32 s'étend alternativement du premier tissu 26 vers le deuxième tissu 28 et du deuxième tissu 28 vers le premier tissu 26 lorsqu'on se déplace le long de l'élément filaire porteur 32. Chaque élément filaire porteur 32 est un élément filaire porteur textile, ici réalisé en polyéthylène téréphtalate (PET). En l'espèce, chaque élément porteur 32 est un élément filaire filé présentant une masse linéique égale à 55 tex et une ténacité égale à 54 cN/tex.

Chaque élément filaire porteur 32 comprend une portion filaire porteuse 74 s'étendant entre les premier et deuxième tissus 26, 28, notamment entre les faces internes 42 et 46. Chaque élément filaire porteur 32 comprend des première et deuxième portions filaires d'ancrage 76, 78 de l'élément filaire porteur 32 respectivement dans le premier tissu 26 et le deuxième tissu 28. Chaque première et deuxième portion filaire d'ancrage 76, 78 prolonge la portion porteuse 74 respectivement dans chaque premier tissu 26 et deuxième tissu 28. Chaque première et deuxième portion filaire d'ancrage 76, 78 est entrelacée respectivement avec chaque premier tissu 26 et deuxième tissu 28. Chaque première et deuxième portion filaire d'ancrage 76, 78 est enroulée au moins en partie autour respectivement d'au moins un premier élément filaire 64, 66 du premier tissu 26 et d'au moins un deuxième élément filaire 68, 70 du deuxième tissu 28. Ainsi, chaque portion filaire d'ancrage 76, 78 relie deux portions filaires porteuses 74 entre elles et chaque portion filaire porteuse 74 relie deux portions filaires d'ancrage 76, 78 entre elles.

En l'espèce, chaque première portion filaire d'ancrage 76 est enroulée au moins en partie autour d'au moins un premier élément filaire de trame 66 du premier tissu 26 et ici, de préférence, autour d'au moins deux premiers éléments filaire de trame 66 adjacents selon la première direction générale G1. De façon analogue, chaque deuxième portion filaire d'ancrage 78 est enroulée au moins en partie autour d'au moins un deuxième élément filaire de trame 68 du deuxième tissu 28, de préférence autour d'au moins deux deuxièmes éléments filaire de trame 66 adjacents selon la deuxième direction générale G2.

Chaque première et deuxième portion filaire d'ancrage 76, 78 s'étend selon une direction sensiblement parallèle à respectivement la première et deuxième direction générale G1, G2.

Chaque première portion filaire d'ancrage 76 passe alternativement de la face 41 à la face 42 entre deux premiers éléments filaires de trame 66 adjacents autour desquels la première portion filaire d'ancrage 76 s'enroule. De façon analogue, chaque deuxième portion filaire d'ancrage 78 passe alternativement de la face 46 à la face 49 entre deux deuxièmes éléments filaires de trame 68 adjacents autour desquels la deuxième portion filaire d'ancrage 78 s'enroule.

Le premier tissu 26 comprend des zones droites transversales Z1 d'un premier groupe de zones, chaque zone droite transversale Z1 présentant une longueur au repos Ld1 selon la première direction générale G1 et s'étendant sur toute la largeur du premier tissu 26. Cette longueur Ld1 est la même pour toutes les zones droites transversales Z1 ici égale à 7,9 mm.

Toutes les zones droites transversales Z1 du premier groupe de zones droites transversales sont identiques.

Le premier tissu 26 comprend également des zones droites transversales Z2 d'un deuxième groupe de zones, chaque zone droite transversale Z2 présentant une longueur au repos Ld2 selon la première direction générale G1 et s'étendant sur toute la largeur du premier tissu 26. Cette longueur Ld2 est la même pour toutes les zones droites transversales Z2 est ici égale à 5,8 mm. Toutes les zones droites transversales Z2 du deuxième groupe de zones droites transversales sont identiques.

Chaque zone droite transversale Z1 du premier groupe de zones alterne, selon la première direction générale ou selon la direction circonférentielle XX', avec une zone droite transversale Z2 du deuxième groupe de zones.

Lorsque le premier tissu est au repos comme cela est représenté sur la **figure 3****,** la somme des longueurs au repos Ld1 et Ld2 de toutes les zones droites transversales selon la première direction générale G1 est sensiblement égale à L. En l'espèce, pour une longueur L de l'assemblage 24 et donc une longueur L du premier tissu L=1692 mm présentant une largeur 1=220 mm, la somme SLd1 des longueurs au repos Ld1 des zones droites transversales Z1 est égale à 975 mm et la somme des longueurs au repos Ld2 des zones droites transversales Z2 est égale à 717 mm. Le premier tissu comprend ainsi 123 zones droites transversales Z1 et Z2 entières ainsi qu'une zone droite transversale Z2 incomplète.

Dans l'arrangement particulier illustré **figure 4****,** correspondant à arrangement particulier d'un assemblage imprégné 21 selon l'invention, le premier tissu 26 est imprégné au moins en partie d'une première couche 33 d'une première composition polymérique 34. Le deuxième tissu 28 est imprégné au moins en partie d'une deuxième couche 35 d'une deuxième composition polymérique 36.

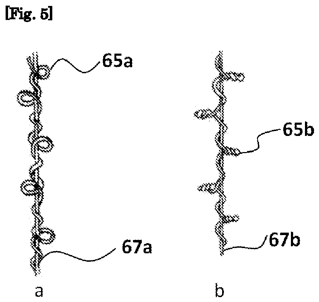

La **figure 5** présente différents arrangements possibles de premiers éléments filaires utilisables dans l'assemblage selon l'invention, connus de l'Homme du métier sous les désignations fil bouclé ou « loop yarn » (a) et fil bouclé vrillé ou « snarl yarn » (b). Chaque premier élément filaire de chaine comprend des premier (65a, 65b) et deuxième (67a, 67b) organes filaires. Le deuxième organe filaire (67a, 67b) est sensiblement rectiligne et le premier organe filaire (65a, 65b) est enroulé sensiblement en hélice autour du deuxième organe filaire et forme des boucles de façon sensiblement périodique.

## Revendications

1. Assemblage pour un pneumatique comprenant :
a. un premier tissu, présentant un bord longitudinal s'étendant suivant une première direction générale (G1), comprenant des premiers éléments filaires, dits de chaîne, sensiblement parallèles entre eux et s'étendant selon une première direction (C1) dite de chaine, sensiblement parallèle à la première direction générale (G1), chaque premier élément filaire de chaîne comprenant des premier et deuxième organes filaires ;
b. un deuxième tissu, comprenant un bord longitudinal s'étendant suivant une deuxième direction (G2), la première direction générale (G1) et la deuxième direction (G2) étant sensiblement parallèles ;
c. une structure porteuse comprenant des éléments filaires porteurs reliant le premier tissu au deuxième tissu, chaque élément filaire porteur comprenant au moins une portion filaire porteuse s'étendant entre le premier et le deuxième tissu ;
l'assemblage étant **caractérisé en ce que**, pour tout allongement du premier tissu selon la première direction générale (G1) inférieur ou égal à 2×π×H / L, le deuxième organe filaire se déforme plastiquement, avec 0 < H ≤ K.H0, H0 représentant en m la distance droite moyenne entre une face interne du premier tissu et une face interne du deuxième tissu lorsque chaque portion filaire porteuse est au repos, L représentant la longueur au repos du premier tissu selon la première direction générale (G1) et K=1,3.

2. Assemblage selon la revendication précédente dans lequel, pour tout allongement du premier tissu selon la première direction générale (G1) inférieur ou égal à 2×π×H / L, des deuxièmes organes filaires sont non rompus.

3. Assemblage selon l'une quelconque des revendications précédentes dans lequel, pour chaque premier élément filaire de chaîne, le deuxième organe filaire présente au sein du premier élément filaire un allongement avant rupture supérieur à celui du premier organe filaire.

4. Assemblage selon l'une quelconque des revendications précédentes dans lequel le deuxième organe filaire est sensiblement rectiligne et le premier organe filaire est enroulé sensiblement en hélice autour du deuxième organe filaire.

5. Assemblage selon la revendication précédente dans lequel le premier organe filaire forme sensiblement périodiquement des boucles.

6. Assemblage selon l'une quelconque des revendications précédentes dans lequel la longueur de chaque premier organe filaire au repos est comprise entre L et 1,30×L, préférentiellement comprise entre L et 1,25×L, très préférentiellement comprise entre L et 1,20×L.

7. Assemblage selon l'une quelconque des revendications précédentes dans lequel la ténacité du deuxième organe filaire est inférieure ou égale à 20 cN/tex, de préférence inférieure à 15 cN/tex, de manière préférée inférieure à 10 cN/tex.

8. Assemblage selon l'une quelconque des revendications précédentes dans lequel le deuxième organe filaire se déforme plastiquement sous une contrainte inférieure ou égale à 60 MPa, préférentiellement inférieure ou égale à 40 MPa.

9. Assemblage selon la revendication précédente dans lequel le deuxième organe filaire se déforme plastiquement sous une contrainte supérieure ou égale à 10 MPa, préférentiellement supérieure ou égale à 15 MPa.

10. Assemblage selon l'une quelconque des revendications précédentes dans lequel, pour tout allongement du premier tissu selon la première direction générale (G1) inférieur ou égal à 2×π×H / L, chaque premier et deuxième organe filaire est non rompu.

11. Assemblage selon l'une quelconque des revendications précédentes dans lequel la force maximale développée par le premier tissu est supérieure ou égale à (P0 × (L/2π + H) × 1) / 2, 1 étant la largeur du premier tissu mesurée perpendiculairement à la première direction générale et exprimée en m, et P0 étant égal à 100000 Pa.

12. Assemblage selon l'une quelconque des revendications précédentes, dans lequel le premier tissu comprend :
a. un premier groupe de zones comprenant au moins une zone droite transversale (Z1), chaque zone droite transversale (Z1) du premier groupe de zones étant agencée de façon à permettre un allongement sans rupture d'au moins une zone droite transversale (Z1) du premier groupe de zones selon la première direction générale (G1),
b. un deuxième groupe de zones comprenant au moins une zone droite transversale (Z2), chaque zone droite transversale (Z2) du deuxième groupe de zones étant agencée de façon à empêcher une rupture de ladite zone droite transversale (Z2).

13. Assemblage imprégné comprenant un assemblage selon l'une quelconque des revendications précédentes, le premier tissu étant imprégné au moins en partie d'une première composition polymérique, et le deuxième tissu étant imprégné au moins en partie d'une deuxième composition polymérique.

14. Article de caoutchouc comprenant un assemblage selon l'une quelconque des revendications 1 à 12, ou un assemblage imprégné selon la revendication 13.

15. Pneumatique comprenant un assemblage selon l'une quelconque des revendications 1 à 12, ou un assemblage imprégné selon la revendication 13.

## Patentansprüche

1. Anordnung für einen Reifen, umfassend
a. ein erstes Gewebe, das einen Längsrand aufweist, der sich entlang einer ersten Grundrichtung (G1) erstreckt, umfassend erste fadenförmige Elemente, Kettelemente genannt, die im Wesentlichen parallel zueinander verlaufen und sich entlang einer ersten Richtung (C1), Kettrichtung genannt, erstrecken, die im Wesentlichen parallel zu der ersten Grundrichtung (G1) verläuft, wobei jedes erste fadenförmige Kettelement erste und zweite fadenförmige Organe umfasst;
b. ein zweites Gewebe, das einen Längsrand umfasst, der sich entlang einer zweiten Richtung (G2) erstreckt, wobei die erste Grundrichtung (G1) und die zweite Richtung (G2) im Wesentlichen parallel verlaufen;
c. eine Tragstruktur, die tragende fadenförmige Elemente umfasst, die das erste Gewebe mit dem zweiten Gewebe verbinden, wobei jedes tragende fadenförmige Element mindestens einen tragenden fadenförmigen Abschnitt umfasst, der sich zwischen dem ersten und dem zweiten Gewebe erstreckt;
wobei die Anordnung **dadurch gekennzeichnet ist, dass**, bei jeder Dehnung des ersten Gewebes entlang der ersten Grundrichtung (G1) kleiner oder gleich 2×π×H / L, das zweite fadenförmige Organ sich plastisch verformt, mit 0 < H ≤ K.H0, wobei H0 für den mittleren geraden Abstand zwischen einer Innenseite des ersten Gewebes und einer Innenseite des zweiten Gewebes in m steht, wenn jeder tragende fadenförmige Abschnitt in Ruhe ist, L für die Länge in Ruhe des ersten Gewebes entlang der ersten Grundrichtung (G1) steht und K=1,3 ist.

2. Anordnung nach dem vorhergehenden Anspruch, bei der, bei jeder Dehnung des ersten Gewebes entlang der ersten Grundrichtung (G1) kleiner oder gleich 2×*π*×H / L, zweite fadenförmige Organe nicht gerissen sind.

3. Anordnung nach einem der vorhergehenden Ansprüche, bei der, bei jedem ersten fadenförmigen Kettelement, das zweite fadenförmige Organ in dem ersten fadenförmigen Element eine Reißdehnung aufweist, die größer als die des ersten fadenförmigen Organs ist.

4. Anordnung nach einem der vorhergehenden Ansprüche, bei der das zweite fadenförmige Organ im Wesentlichen geradlinig ist und das erste fadenförmige Organ im Wesentlichen gewendelt um das zweite fadenförmige Organ herum gewickelt ist.

5. Anordnung nach dem vorhergehenden Anspruch, bei der das erste fadenförmige Organ im Wesentlichen periodisch Schlingen bildet.

6. Anordnung nach einem der vorhergehenden Ansprüche, bei der die Länge jedes ersten fadenförmigen Organs in Ruhe zwischen L und 1,30xL, bevorzugt zwischen L und 1,25xL, besonders bevorzugt zwischen L und 1,20xL beträgt.

7. Anordnung nach einem der vorhergehenden Ansprüche, bei der die Festigkeit des zweiten fadenförmigen Organs kleiner oder gleich 20 cN/tex, bevorzugt kleiner als 15 cN/tex, vorzugsweise kleiner als 10 cN/tex ist.

8. Anordnung nach einem der vorhergehenden Ansprüche, bei der sich das zweite fadenförmige Organ unter einer Beanspruchung kleiner oder gleich 60 MPa, bevorzugt kleiner oder gleich 40 MPa, plastisch verformt.

9. Anordnung nach dem vorhergehenden Anspruch, bei der sich das zweite fadenförmige Organ unter einer Beanspruchung größer oder gleich 10 MPa, bevorzugt größer oder gleich 15 MPa, plastisch verformt.

10. Anordnung nach einem der vorhergehenden Ansprüche, bei der, bei jeder Dehnung des ersten Gewebes entlang der ersten Grundrichtung (G1) kleiner oder gleich 2×*π*×H / L, jedes erste und zweite fadenförmige Organ nicht gerissen ist.

11. Anordnung nach einem der vorhergehenden Ansprüche, bei der die von dem ersten Gewebe entfaltete maximale Kraft größer oder gleich (P0 × (L/2π + H) × l) / 2, ist, wobei l die senkrecht zur ersten Grundrichtung gemessene und in m ausgedrückte Breite des ersten Gewebes ist und P0 gleich 100000 Pa ist.

12. Anordnung nach einem der vorhergehenden Ansprüche, wobei das erste Gewebe umfasst:
a. eine erste Gruppe von Bereichen, umfassend mindestens einen quer verlaufenden geraden Bereich (Z1), wobei jeder quer verlaufende gerade Bereich (Z1) der ersten Gruppe von Bereichen so angeordnet ist, dass eine Dehnung ohne Reißen mindestens eines quer verlaufenden geraden Bereichs (Z1) der ersten Gruppe von Bereichen entlang der ersten Grundrichtung (G1) ermöglicht wird,
b. eine zweite Gruppe von Bereichen, umfassend mindestens einen quer verlaufenden geraden Bereich (Z2), wobei jeder quer verlaufende gerade Bereich (Z2) der zweiten Gruppe von Bereichen so angeordnet ist, dass ein Reißen des quer verlaufenden geraden Bereichs (Z2) verhindert wird.

13. Imprägnierte Anordnung, umfassend eine Anordnung nach einem der vorhergehenden Ansprüche, wobei das erste Gewebe mindestens teilweise mit einer ersten Polymerzusammensetzung imprägniert ist und wobei das zweite Gewebe mindestens teilweise mit einer zweiten Polymerzusammensetzung imprägniert ist.

14. Kautschukartikel, umfassend eine Anordnung nach einem der Ansprüche 1 bis 12 oder eine imprägnierte Anordnung nach Anspruch 13.

15. Reifen, umfassend eine Anordnung nach einem der Ansprüche 1 bis 12 oder eine imprägnierte Anordnung nach Anspruch 13.

## Claims

1. Assembly for a tyre, comprising:
a. a first fabric, having a longitudinal edge extending in a first general direction (G1), comprising first filamentary elements, referred to as warp elements, that are substantially parallel to one another and that extend in a first direction (C1), referred to as warp direction, substantially parallel to the first general direction (G1), each first filamentary element comprising first and second filamentary members;
b. a second fabric, comprising a longitudinal edge extending in a second direction (G2), the first general direction (G1) and the second direction (G2) being substantially parallel;
c. a load-bearing structure comprising load-bearing filamentary elements connecting the first fabric to the second fabric, each load-bearing filamentary element comprising at least one load-bearing filamentary portion extending between the first and the second fabric;
the assembly being **characterized in that**, for any elongation of the first fabric in the first general direction (G1) of less than or equal to 2×π×H/L, the second filamentary member deforms plastically, with 0 < H ≤ K.H0, H0 representing in m a mean straight-line distance between an internal face of the first fabric and an internal face of the second fabric when each load-bearing filamentary portion is at rest, L representing the length at rest of the first fabric in the first general direction (G1) and K=1.3.

2. Assembly according to the preceding claim, wherein, for any elongation of the first fabric in the first general direction (G1) of less than or equal to 2×π×H/L, second filamentary members are unbroken.

3. Assembly according to either one of the preceding claims, wherein, for each first warp filamentary element, the second filamentary member exhibits, within the first filamentary element, an elongation at break greater than that of the first filamentary member.

4. Assembly according to any one of the preceding claims, wherein the second filamentary member is substantially rectilinear and the first filamentary member is substantially helically wound around the second filamentary member.

5. Assembly according to the preceding claim, wherein the first filamentary member forms loops in a substantially periodic manner.

6. Assembly according to any one of the preceding claims, wherein the length at rest of each first filamentary member is between L and 1.30×L, preferably between L and 1.25×L, very preferably between L and 1.20×L.

7. Assembly according to any one of the preceding claims, wherein the tenacity of the second filamentary member is less than or equal to 20 cN/tex, preferably less than 15 cN/tex, preferably less than 10 cN/tex.

8. Assembly according to any one of the preceding claims, wherein the second filamentary member deforms plastically under a stress loading less than or equal to 60 MPa, preferably less than or equal to 40 MPa.

9. Assembly according to the preceding claim, wherein the second filamentary member deforms plastically under a stress loading greater than or equal to 10 MPa, preferably greater than or equal to 15 MPa.

10. Assembly according to any one of the preceding claims, wherein, for any elongation of the first fabric in the first general direction (G1) of less than or equal to 2×π×H/L, each first and second filamentary member is unbroken.

11. Assembly according to any one of the preceding claims, wherein the maximum force developed by the first fabric is greater than or equal to (P0× (L/2n+H) ×l) /2, where 1 is the width of the first fabric measured perpendicularly with respect to the first general direction and expressed in m, and P0 is equal to 100000 Pa.

12. Assembly according to any one of the preceding claims, wherein the first fabric comprises:
a. a first group of zones comprising at least one transverse straight zone (Z1), each transverse straight zone (Z1) of the first group of zones being arranged so as to allow elongation of at least one transverse straight zone (Z1) of the first group of zones in the first general direction (G1) without breakage,
b. a second group of zones comprising at least one transverse straight zone (Z2), each transverse straight zone (Z2) of the second group of zones being arranged in such a way as to prevent breakage of said transverse straight zone (Z2).

13. Impregnated assembly comprising an assembly according to any one of the preceding claims, the first fabric being impregnated at least in part with a first polymer composition, and the second fabric being impregnated at least in part with a second polymer composition.

14. Rubber article comprising an assembly according to any one of Claims 1 to 12, or an impregnated assembly according to Claim 13.

15. Tyre comprising an assembly according to any one of Claims 1 to 12, or an impregnated assembly according to Claim 13.
